## Europäisches Patentamt

## European Patent Office

## Office européen des brevets

(19)

(11) Veröffentlichungsnummer: **0 165 378**
**B1**

(12) **EUROPÄISCHE PATENTSCHRIFT**

(45) Veröffentlichungstag der Patentschrift: **19.12.90**

(51) Int. Cl.⁵: **G 01 P 3/486,** G 01 D 5/36

(21) Anmeldenummer: **85102677.3**

(22) Anmeldetag: **08.03.85**

(54) Einrichtung für die digitale Steuerung einer Maschine bzw. eines Gerätes, insbes. eines Matrixdruckers.

(30) Priorität: **19.05.84 DE 3418798**

(43) Veröffentlichungstag der Anmeldung:
**27.12.85 Patentblatt 85/52**

(45) Bekanntmachung des Hinweises auf die
Patenterteilung:
**19.12.90 Patentblatt 90/51**

(84) Benannte Vertragsstaaten:
**AT BE CH FR GB IT LI NL**

(56) Entgegenhaltungen:
**EP-A-0 076 858**
**DE-A-1 762 937**
**DE-A-2 948 182**
**DE-A-3 014 821**
**DE-A-3 111 862**
**US-A-3 566 136**

(73) Patentinhaber: **MANNESMANN
Aktiengesellschaft
Mannesmannufer 2
D-4000 Düsseldorf 1 (DE)**

(72) Erfinder: **Babsch, Alfred
St. Jakobstrasse 14
D-7900 Ulm-Söflingen (DE)**
Erfinder: **Beth, Dieter
Junginger Strasse 16
D-7911 Tahlfingen (DE)**
Erfinder: **Panzer, Werner
Frühlingstrasse 16
D-7913 Senden-Wullenstetten (DE)**
Erfinder: **Stempfle, Johann, Dipl.-Ing. (FH)
Haus Nr. 19
D-7914 Pfaffenhofen-Erbishofen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

# Beschreibung

Die Erfindung betrifft eine Einrichtung für die digitale Steuerung einer Maschine oder eines Gerätes, insbesondere eines Matrixdruckers, mittels eines einem Eintrieb zugeordneten, opto-elektronischen Inkremental-Sensors, der zumindest einen Lichtsender und zumindest zwei im Strahlengang befindliche Wandler aufweist, wobei jeweils zwischen dem Lichtsender und dem Wandler eine für die Lichtstrahlen teils undurchlässige, teils durchlässige Markierungsspur geradlinig oder drehbewegbar ist und wobei zur Erzeugung von phasenverschobenen Signalen der Lichtsender und die Wandler zu den Markierungen jeweils unter einem spitzen Winkel eingestellt sind.

In derartigen digitalen Maschinen-Steuerungen werden geradlinige oder drehende Bewegungen des zu regelnden Antriebsmotors für die Geschwindigkeitssteuerung bzw. -regelung zur Grundlage genommen. Die Ist-Geschwindigkeit wird hierbei durch Inkremental-Sensoren abgetastet. Die erzeugten Signale dienen zum Aktualisieren von Positionszählern, aufgrund deren Zählerstand der Antriebsmotor in nachfolgenden Steuerimpulsreihen korrigiert wird.

Inkremental-Sensoren sind überwiegend aufgrund opto-elektronischer, seltener aufgrund magnetischer Wirkprinzipien realisiert. Diese Inkremental-Sensoren liefern zwei um 90° in der Phase verschobene Taktsignale und in einigen Ausführungsformen auch einen Null-Impuls. Das Vorzeichen der Phasenverschiebung bestimmt die Bewegungsrichtung.

Bei der Steuerung bzw. Regelung der Geschwindigkeit von einem den Druckkopf tragenden Schlitten an Matrixdruckern bzw. deren Antriebsmotoren ist es bekannt (DE—OS 30 14 821), opto-elektronische Inkremental-Sensoren mit zwar unterschiedlichen Abtastprinzipien zu verwenden, jedoch alle mit einem Wandler, der aus einem Fototransistor besteht.

Fototransistoren weisen gewichtige Nachteile auf: Die Verstärkung nimmt mit steigender Temperatur zu und mit steigender Frequenz ab. Die lichtemittierende Diode als Lichtquelle kann zwar diese Temperaturabhängigkeit des Fototransistors kompensieren, weil ihre Strahlungsleistung mit steigender Temperatur abnimmt. Eine solche Kompensation ist jedoch mehr dem Zufall überlassen, weil der Temperaturanstieg des Fototransistors schaltungstechnisch nicht mit dem Temperaturanstieg der Diode gekoppelt ist und der Verstärkungsverlauf des Fototransistors auch nicht mit dem Verlauf des Strahlungsleistungsabfalls der Diode übereinstimmt. In einem solchen Fall müßte also die Diode zum Temperaturgang des Fototransistors passend selektiert werden. Im bekannten Fall hilft man sich dadurch, daß die phasenverschobenen Signale, als Null-Grad-Signal und als 90°-Signal erzeugt werden. Zum Nachregeln des Lichtstroms der lichtemittierenden Diode wird ein dritter Wandler verwendet, der außerhalb der Markierungsspur die Lichtstrahlen empfängt. Es hat sich gezeigt, daß dieses System nicht den Temperatureinfluß kompensiert.

Aus der US—A—4,446,367 ist eine Einrichtung bekannt, die auch für die digitale Steuerung einer Maschine oder eines Geräts, insbesondere eines Matrixdruckers geeignet ist, und zwar mittels eines einem Antrieb zugeordneten, opto-elektronischen Inkremental-Sensors und mit drei parallelen Markierungsspuren, die durch abwechselnd für Lichtstrahlen durchlässige und undurchlässige Abschnitte bestimmt sind. In einer in der Druckschrift erwähnten alternativen Ausführungsform mit zwei gleichzeitig vorhandenen Inkremental-Sensoren werden mehrere Gruppen von jeweils getrennten Lichtstrahlen verwendet, wobei jeder Lichtstrahl zu einer der Markierungsspuren senkrecht verläuft und die Lichtstrahlen jeder Gruppe derart angeordnet sind, daß ihre Auftreffstellen innerhalb der jeweiligen Gruppe innerhalb einer Ebene der Markierungsspur liegen und Abtastpunkte bilden, die auf einer Geraden liegen, die unter einem spitzen Winkel bezüglich der Richtung der Markierungsspur-Abschnitte verläuft, und die Lichtstrahlen aus getrennt ein- und ausschaltbaren Lichtsendern austreten und nach Durchgang der Markierungsscheibe auf ihnen jeweils zugeordnete Wandler auftreffen.

In dieser bekannten Einrichtung werden zwei Gruppen von jeweils zwei auf die Wandler auftreffenden Lichtstrahlen verwendet und die zwei Lichtstrahlen erzeugen um 90° phasenverschobene Signale. Ferner trifft jeder der aus der Markierungsscheibe austretenden Lichtstrahlen unmittelbar auf jeweils einen ihm zugeordneten Wandler auf.

In der US—A—3,566,136 und in der DE—A—31 11 862 sind Inkremental-Sensoren beschrieben, in denen zwar drei getrennte Lichtstrahlen eine Anordnung zur Abtastung einer Markierungsspur aufweisen. Jedoch liegen bei diesen bekannten Einrichtungen die Auftreffstellen der Lichtstrahlen auf der Markierungsspur auf einer Geraden, die senkrecht zu den Markierungsspur-Abschnitten verläuft, und die Einrichtungen sind auch nicht zur Abtastung mehrerer Markierungsspuren geeignet. Daher weisen sie auch jeweils nur einen einzigen Lichtsender auf. Ferner bestehen die Wandler dieser bekannten Einrichtungen nicht aus einer Dreifach-Fotodiode, sondern entweder aus drei getrennten fotoelektrischen Elementen oder aus einer auf einem gemeinsamen Substrat angeordneten Vier-Quadranten-Fotozelle.

Aus der EP—A—0076858 ist ein fotoelektrischer Pulskodierer bekannt, bei dem das aus einer rotierenden Markierungsscheibe austretende Licht durch Lichtwellenleiter zu einer ihnen zugeordneten Umwandlerschaltung geleitet wird. Auch hier trägt die rotierende Markierungsscheibe nur eine Markierungsspur, die lediglich durch zwei getrennte Lichtstrahlen abgetastet wird. Außerdem sind in Zusammenhang mit der dortigen Zeichnung bestehenden Ausführungsform verwendeten Lichtsender- und Wandleranordnungen in der Druckschrift nicht näher erläutert.

Der Erfindung liegt daher die Aufgabe zugrunde, trotz Erwärmung der beteiligten Bauelemente ein genaues Meß- bzw. Steuer- bzw. Regelsignal zu erzeugen, ferner einen besonderen Abgleich des Arbeitspunktes bzw. spezielle Kompensationsmittel zu ersparen.

Die gestellte Aufgabe wird erfindungsgemäß durch eine Einrichtung für die digitale Steuerung einer Maschine oder eines Gerätes, insbesondere eines Matrixdruckers gelöst, mittels eines einem Antrieb zugeordneten, opto-elektronischen Inkremental-Sensors, mit drei parallelen Markierungsspuren, die durch abwechselnd für Lichtstrahlen durchlässige und undurchlässige Abschnitte bestimmt sind, mit drei Gruppen von jeweils drei getrennten Lichtstrahlen, wobei jeder Lichtstrahl zu einer der Markierungsspuren senkrecht verläuft und zwei Lichtstrahlen jeder Gruppe zur Erzeugung gegenphasiger Signale außenliegende Lichtstrahlen bezogen auf die jeweilige Markierungsspur bilden und ein dritter Lichtstrahl als Referenzsignal, das den Signalen der außenliegenden Strahlen um 90° vor- bzw. nacheilt, in der Mitte der Markierungsspur auftrifft, wobei die Lichtstrahlen jeder Gruppe derart angeordnet sind, daß ihre Auftreffstellen innerhalb der jeweiligen Gruppe innerhalb einer Ebene der Markierungsspur liegen und Abtastpunkte bilden, die auf einer Geraden liegen, die unter einem spitzen Winkel bezüglich der Richtung der Markierungsspur-Abschnitte verläuft, ferner mit drei getrennt ein- und ausschaltbaren, aus einer Dreifach-Leuchtdiode bestehenden Lichtsendern und Lichtwellenleitern, die jeweils die drei aus einer Markierungsspur austretenden Lichtstrahlen auf je einen von insgesamt drei Wandlern leiten, die ihrerseits aus einer Dreifach-Fotodiode bestehen. Besonders vorteilhaft sind hier die elektrooptischen Vorrichtungen mit einer gemeinsamen Wandleranordnung zur selektiven Untersuchung von aus verschiedenen Abtaststellen herrührenden Lichtstrahlen.

Die Digitalisierung der erhaltenen Signale bzw. die Umwandlung der sinusförmigen Signale in Rechtecksignale wird dadurch erzielt, daß die in der Markierungsspur außen erzeugten etwa sinusförmigen Signale und das Referenzsignal, jeweils miteinander mittels einer Verstärker-Schaltung verstärkt, einem Impedanzwandler zugeführt und mittels einer Komparator-Schaltung in um 90° phasenverschobene Rechtecksignale umgewandelt werden.

Hierbei ist es noch vorteilhaft, wenn Lichtsender, Lichtwellenleiter und Wandler für mehr als eine Markierungsspur in einer Baueinheit zusammengefaßt sind. Die Baueinheit sichert die Genauigkeit der Lage von besonders wichtigen Teilen, wie z.B. der Lichtwellenleiter.

Ein Ausführungsbeispiel der Erfindung ist in der Zeichnung dargestellt und wird nachfolgend näher erläutert. Es zeigen:

Fig. 1 eine Markierungsspur in einer ersten Position zu einem justierten Inkremental-Sensor,

Fig. 2 die Markierungsspur in einer zweiten Position zu dem Inkremental-Sensor,

Fig. 3 ein Kurvendiagramm der Signale S1, S2 und des Referenzsignals REF mit Umwandlung in Rechtecksignale,

Fig. 4 die Baueinheit aus Lichtsender, Lichtwellenleiter, Trägerkörper und Wandler und

Fig. 5 eine Schaltungsanordnung zur Verarbeitung bzw. Umwandlung der sinusförmigen Signale S1, S2 mit Hilfe des Referenzsignals REF in die Rechtecksignale S1′ und S2′.

Die Einrichtung bedient sich eines opto-elektronischen Inkremental-Sensors 1 unter dem sich die Markierungsspur 2 bewegt. Die Markierungsspur 2 besteht aus lichtdurchlässigen Schlitzen 2a, aus Strichrastern oder dgl. und aus lichtundurchlässigen Stegen 2b. Die Markierungsspur 2 befindet sich auf einem geradlinig bewegten Lineal oder, wie im Ausführungsbeispiel gezeigt, auf einer kreisrunden Scheibe 2c, die auf der (nicht gezeigten) Motorwelle des Antriebs für den Schlitten eines Matrixdruckers koaxial befestigt ist. Die Markierungsspur 2 kann aus Schlitzen und Stegen in Metall gebildet sein oder durch Bedrucken von durchsichtigen Materialien. Der opto-elektronische Inkremental-Sensor arbeitet vorzugsweise mit Infrarot-Licht. Die Achse des Inkremental-Sensors 1 verläuft zu den parallelen Schlitzen 2a bzw. den parallelen Stegen 2b unter dem spitzen Winkel 3. Ohne diesen Winkel 3 würden die Signale S1 und S2 deckungsgleich sein. Die Abtastachse 4, um die der Inkremental-Sensor 1 gedreht wird, steht auf der Ebene der Scheibe 2c senkrecht und fällt vorzugsweise mit dem mittig angeordneten Lichtstrahl 8 des Referenzsignals REF zusammen.

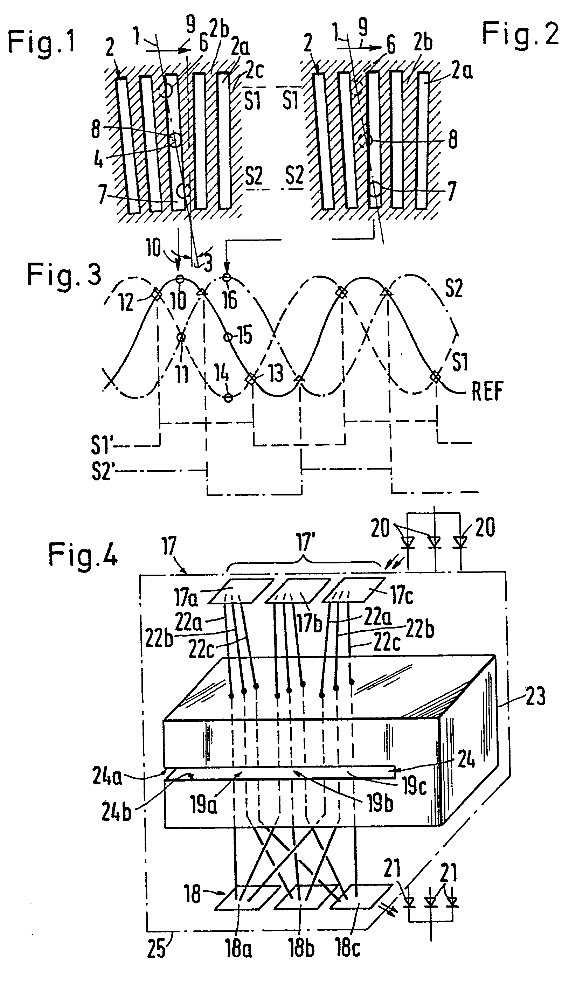

Die Einrichtung ist nun derart aufgebaut, daß zwei Lichtstrahlen 6 und 7 außen zur Abtastachse 4 liegen und mittig der Lichtstrahl 8. Gemäß den Fig. 1 und 2 bewegt sich die Markierungsspur 2 in Pfeilrichtung 9. Der Lichtstrahl 8 fällt in der Position der Fig. 1 voll durch einen Schlitz 2a, so daß das Referenzsignal REF an der Stelle 10 ein Maximum erreicht. Der Winkel 3 ist von einer solchen Größe, daß die Lichtstrahlen 6 und 7 mit etwa der Hälfte ihrer Lichtfläche in denselben Schlitz 2a fallen, so daß sich hierbei die gegenphasigen gestrichelt bzw. strichpunktiert gezeichneten Wellen der Signale S1 und S2 im Punkt 11 schneiden. Der Punkt 11 liegt auf der Null-Linie und entspricht dem Maximum des Referenzsignals REF. Im Schnittpunkt 12 des Referenzsignals REF mit dem Signal S1 beginnt eine Signaldauer, die bis zum Schnittpunkt 13 reicht.

Das Nacheilen bzw. das Voreilen um 90° der Signale S1 und S2 in bezug auf das Referenzsignal REF ergibt sich noch deutlicher durch Fig. 2, wo der Lichtstrahl 6 durch den Steg 2b völlig abgedeckt wird, so daß das Signal S1 ein Minimum im Punkt 14 erreicht. Das Referenzsignal REF durchläuft aufgrund des halbabgedeckten Lichtstrahls 8 die Null-Linie im Punkt 15 und das Signal S2 erreicht durch den Lichtstrahl 7 im Punkt 16 ein Maximum (Fig. 3).

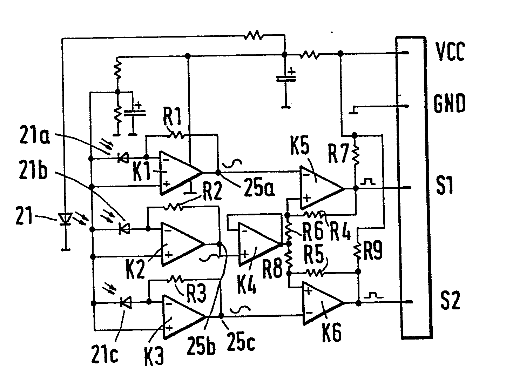

Die Umwandlung der Signale S1 und S2, die gemäß Fig. 3 in Wellenform auftreten, in die Rechtecksignale S1' und S2' gemäß dem unteren Teil der Fig. 3 wird noch in Verbindung mit Fig. 5 näher beschrieben.

Die gleiche Leucht- bzw. Strahlendichte unabhängig von der Temperatur und/oder der Frequenz eines Lichtstrahlen aussendenden Körpers wird nun durch einen einzigen Lichtsender 17 erzielt. Der Lichtsender 17 ist einer Markierungsspur 2 zugeordnet oder ein Lichtsender 17' drei oder mehreren solcher Markierungsspuren 2. Einzelne Lichtsender 17 besitzen den Vorteil der einzelnen Zu- oder Abschaltung von Inkremental-Sensoren 1, wie ein Steuerungs- oder Regelbetrieb die Mehrfachsignalbildung erfordert. Jedem Lichtsender ist auf seiner Markierungsspur 2 nach diesem System jeweils ein Wandler 18 zugeordnet.

Gemäß Fig. 4 sind drei Markierungsspuren 19a, 19b und 19c (ohne die Schlitze 2a bzw. die Stege 2b der Scheibe 2c gezeichnet) dargestellt. Die Lichtsender 17 (17a, 17b, 17c) bestehen aus einer durch das Schaltungssymbol angedeuteten sogenannten Dreifach-Leuchtdiode 20. Der Wandler 18 (18a, 18b, 18c) besteht aus der Dreifach-Fotodiode 21, die ebenfalls als Schaltsymbol neben die zugehörigen Wandler 18a, 18b, 18c gezeichnet sind (Fig. 4). Als Besonderheit ist vorgesehen, daß pro Markierungsspur 19a, 19b, 19c jeweils ein Lichtsender 17a, 17b, 17c ein- oder ausgeschaltet werden kann. Hierzu führen die Lichtwellenleiter von allen Lichtsendern die Referenzsignale zu einem gemeinsamen Wandler 18b, die Signale S1 zu einem gemeinsamen Wandler 18a und die Signale S2 zu einem gemeinsamen Wandler 18c.

Die Weiterleitung des Lichts von dem Lichtsender 17 (17a, 17b, 17c; 17') in die Markierungsspuren 2 (19a, 19b, 19c) erfolgt durch Lichtwellenleiter 22a, 22b und 22c, die durch den Trägerkörper 23 bis zu dessen Bewegungsspalt 24, und zwar an der einen Bewegungsspaltseite 24a geführt sind. Ebensolche Lichtwellenleiter 22a, 22b und 22c sind von der gegenüberliegenden Bewegungsspaltseite 24b wiederum durch den Trägerkörper 23 hindurch zu den korrespondierenden Wandlern 18a, 18b und 18c geführt.

Die höhere Genauigkeit der Einrichtung wird vorteilhafterweise durch eine Bauweise gesteigert, die den oder die Lichtsender 17 (17a, 17b, 17c; 17'), die Lichtwellenleiter 22a bis 22c und die Wandler 18 in einer Baueinheit 25 zusammenfaßt. Hierbei sind die Enden der Lichtwellenleiter 22a bis 22c jeweils achsengleich mit höchster Genauigkeit eingesetzt, was durch Umgießen in Form des Trägerkörpers 23 erfolgt und nachträgliches Einarbeiten des Bewegungspaltes 24 erzielt wird.

Das Infrarot-Licht wird von der Dreifach-Fotodiode 21 empfangen, deren Lichtempfindliche Flächen durch ihre Geometrie oder durch Blenden so an die Markierungsspur 2 angepaßt sind, daß jede der drei Flächen (Schlitz 2a oder Steg 2b) gleich viel Licht empfangen, wenn die Dreifach-Fotodiode 21 parallel zu einem Schlitz 2a stehen würde und durch diesen beleuchtet wird. Unter diesen Bedingungen werden von der Dreifach-Fotodiode 21 gleichgroße elektrische Signale erzeugt.

Die Umwandlung der Signale S1 und S2 gemäß Fig. 3, oberer Teil, in Rechtecksignale S1' und S2' gemäß Fig. 3, unterer Teil, wird nunmehr anhand Fig. 5 beschrieben.

Die Schaltungsanordnung gemäß Fig. 5 digitalisiert die Signal S1 und S2 aufgrund von Spannungskomparatoren wie folgt:

Das Signal S1 wird mit dem Referenzsignal REF verglichen und das Signal S2 ebenfalls mit dem Referenzsignal REF. Hierzu ist die Dreifach-Fotodiode 21 mit ihren einzelnen Fotodioden 21a, 21b und 21c jeweils einem Verstärker K1, K2 und K3 zugeordnet, und zwar das Signal S1 dem Verstärker K1, das Referenzsignal REF dem Verstärker K2 und das Signal S2 dem Verstärker K3. Die Einzel-Fotodioden 21a bis 21c liegen jeweils an den Minus-Anschlüssen der Verstärker K1 bis K3. Gegenüber den Ausgängen 25a, 25b und 25c sind Gegenkopplungs-Widerstände R1, R2 und R3 geschaltet. Die etwa sinusförmigen Vergleichssignale S1, S2 werden dem Impedanzwandler K4 zwecks Pufferung zugeführt und den Komparatoren K5 bzw. K6 zum Digitalisieren der Signale zugeleitet. Die Komparatoren K5 und K6 sind mit den Mitkopplungswiderständen R4 und R5 und mittels der Entkopplungswiderstände R6 und R8 bzw. der Arbeitswiderstände R7 und R9 beschaltet. Die Signale S1' und S2' können daher wie in Fig. 3 gezeichnet um 90° phasenverschoben als Rechtecksignale abgegriffen werden.

**Patentansprüche**

1. Einrichtung für die Digitalsteuerung einer Maschine oder eines Gerätes, insbesondere eines Matrixdruckers, mittels eines einem Antrieb zugeordneten, opto-elektronischen Inkremental-Sensors, mit drei parallelen Markierungsspuren (19a, 19b, 19c), die durch abwechselnd für Lichtstrahlen durchlässige und undurchlässige Abschnitte bestimmt sind, mit drei Gruppen von jeweils drei getrennten Lichtstrahlen, wobei jeder Lichtstrahl zu einer der Markierungsspuren (19a, 19b, 19c) senkrecht verläuft und zwei Lichtstrahlen jeder Gruppe zur Erzeugung gegenphasiger Signale außenliegende Lichtstrahlen bezogen auf die jeweilige Markierungsspur (19a, 19b, 19c) bilden und ein dritter Lichtstrahl als Referenzsignal, das den Signalen der außenliegenden Strahlen um 90° vor- bzw. nacheilt, in der Mitte der Markierungsspur (19a, 19b, 19c) auftrifft, wobei die Lichtstrahlen jeder Gruppe derart angeordnet sind, daß ihre Auftreffstellen innerhalb der jeweiligen Gruppe innerhalb einer Ebene der Markierungsspur (19a, 19b, 19c) liegen und Abtastpunkte bilden, die auf einer Geraden liegen, die unter einem spitzen Winkel bezüglich der Richtung der Markierungsspur-Abschnitte (2a, 2b) verläuft, ferner mit drei getrennt ein- und ausschaltbaren, aus einer Dreifach-Leuchtdiode bestehenden Lichtsendern (17a, 17b, 17c) und Lichtwellenleitern (22a, 22b, 22c), die jeweils die drei aus einer Markierungsspur austretenden Lichtstrahlen auf je einen von insgesamt drei Wandlern (18a, 18b, 18c) leiten, die ihrerseits aus einer Dreifach-Fotodiode (21) bestehen.

2. Einrichtung nach Anspruch 1, dadurch gekennzeichnet, daß die in der Markierungsspur (2) außen erzeugten etwa sinusförmigen Signale (S1, S2) und das Referenzsignal (REF) jeweils miteinander mittels einer Verstärker-Schaltung (K1, K2, K3) verstärkt, einem Impedanzwandler (K4) zugeführt und mittels einer Komparator-Schaltung (K5, K6) in um 90° phasenverschobene Rechtecksignale (S1, S2) umgewandelt werden (Fig. 3 und 5).

3. Einrichtung nach den Ansprüchen 1 und 2 dadurch gekennzeichnet, daß Lichtsender (17), Lichtwellenleiter (22a, 22b, 22c) und Wandler (18) für mehr als eine Markierungsspur (2; 19a, 19b, 19c) in einer Baueinheit (25) zusammengefaßt sind.

## Revendications

1. Installation de commande numérique d'une machine ou d'un appareil notamment d'une imprimante matricielle à l'aide d'un capteur optoélectronique incrémental associé à un moyen d'entraînement, avec trois traces de marquage parallèles (19a, 19b, 19c) qui sont définies par l'alternance de segments transparents et opaques aux rayons lumineux, avec trois groupes de chaque fois trois faisceaux lumineux distincts, chaque faisceau lumineux étant perpendiculaire à l'une des traces de marquage (19a, 19b, 19c) et deux faisceaux lumineux de chaque groupe formant des signaux en opposition de phase pour les faisceaux lumineux situés à l'extérieur par rapport à la trace de marquage respective (19a, 19b, 19c), un troisième faisceau lumineux constituant le signal de référence, étant en avance ou en retard de phase de 90° par rapport aux signaux des faisceaux extérieurs, et arrivant au milieu de la trace de marquage (19a, 19b) et 19c, les faisceaux lumineux de chaque groupe étant tels que leur point d'incidence à l'intérieur de chacun des groupes dans un plan de la trace de marquage (19a, 19b, 19c) forme des points de détection situés sur une droite faisant un angle aigu par rapport à la direction des segments de la trace de marquage (2a, 2b) avec en outre trois photoémetteurs à mise en oeuvre indépendante (17a, 17b, 17c) formés d'une triple photodiode et des conducteurs de lumière (22a, 22b, 22c) qui dirigent les trois faisceaux lumineux sortant d'une trace de marquage, chaque fois sur un total de trois convertisseurs (18a, 18b, 18c) constitués euxmêmes d'une triple photodiode (21).

2. Installation selon la revendication 1, caractérisée en ce que les signaux (S1, S2) de forme sensiblement sinusoïdale, générés à l'extérieur de la trace de marquage (2) et le signal de référence (REF) sont amplifiés en commun à l'aide d'un amplificateur (K1, K2, K3) pour être appliqués à un convertisseur d'impédance (K4) et être transformés à l'aide d'un comparateur (K5, K6) en des signaux rectangulaires (S1, S2) déphasés de 90° (figures 3 et 5).

3. Installation selon les revendications 1 et 2, caractérisée en ce que le photo-émetteur (17), les conducteurs de lumière (22a, 22b, 22c) et le convertisseur (18) sont réunis en un ensemble (25) pour plus d'une trace de marquage (2; 19a, 19b, 19c).

## Claims

1. Device for the digital control of a machine or of an appliance, in particular of a matrix printer, by means of an opto-electronic incremental sensor associated with a drive, with three parallel marking traces (19a, 19b, 19c), which are determined by sections alternately permeable and impermeable to light rays, with three groups each of three separate light rays, each light ray extending perpendicular to one of the marking traces (19a, 19b, 19c) and for producing oppositely phased signals, two light rays of each group forming external light rays relative to the respective marking trace (19a, 19b, 19c) and a third light ray as a reference signal, which leads or lags behind the signals of the external rays by 90°, being incident in the centre of the marking trace (19a, 19b, 19c), the light rays of each group being disposed so that their incidence points within the respective group lie within one plane of the marking trace (19a, 19b, 19c) and form scanning points, which lie on a straight line, which extends at an acute angle relative to the direction of the marking trace sections (2a, 2b), furthermore with three light emitters (17a, 17b, 17c), which can be switched on and off separately and consisting of a tripple photodiode, and light wave guides (22a, 22b, 22c), which each guide the three light rays emerging from a marking trace respectively onto one of a total of three transformers (18a, 18b, 18c), which in turn consist of a triple photodiode (21).

2. Device according to Claim 1, characterised in that the approximately sinusoidal signals (S1, S2) produced externally in the marking trace (2) and the reference signal (REF), respectively amplified one with another by means of an amplifier circuit (K1, K2, K3), are supplied to an impedance transformer (K4) and are converted by means of a comparator circuit (K5, K6) into square-wave signals (S1, S2) phase-shifted by 90° (Figures 3 and 5).

3. Device according to Claims 1 and 2, characterised in that light emitters (17), light wave guides (22a, 22b, 22c) and transformers (18) for more than one marking trace (2; 19a, 19b, 19c) are combined in one basic unit (25).

Fig.1

Fig.2

Fig.3

Fig.4